# EUROPEAN PATENT APPLICATION

(11) **EP 3 385 780 A1**
(43) Date of publication of application: **10.10.2018**
(21) Application number: 17165072.4
(22) Date of filing: 05.04.2017
(51) Int. Cl.: G02F 1/1333, G09G 3/36

(54) **LCD PANEL CUTTING METHOD AND LCD SYSTEM USING SAME**

(71) Applicant: PowerView Display Corporation, Zhubei City, Hsinchu County 30265 (TW)
(72) Inventor: CHIEN, Cheng-Pang, Zhubei City, Hsinchu County 30265 (TW)
(74) Representative: Krauns, Christian

(57) **Abstract**

A LCD cutting method is provided. Firstly, a LCD panel with M gate layout traces is cut into a cut LCD panel along a direction parallel to the M gate layout traces. The cut LCD panel includes a cut active area and a cut inactive area. The cut inactive area includes N serially-connected gate drivers. The cut active area includes N gate layout traces. The N gate layout traces are connected with the N serially-connected gate drivers, respectively. Moreover, N and M are positive integers, and N is smaller than M. Then, an input terminal of a first gate driver of the N serially-connected gate drivers is connected with a control layout trace.

## Description

### FIELD OF THE INVENTION

The present invention relates to a LCD panel, and more particularly to a LCD panel cutting method and a LCD display system using the method.

### BACKGROUND OF THE INVENTION

Nowadays, LCD panels are widely used as TV screens or computer screens. Generally, the LCD panel has a standard size according to the size and the aspect ratio of the TV screen or the computer screen.

For example, the manufacturers of LCD panels provide LCD panels having a standard size (e.g., 40 inches) and a standard aspect ratio (e.g., 16:9) to the manufacturers of TV sets. Moreover, the manufacturers of TV sets employ the standard-sized LCD panels to produce the 40-inch TV set.

In industrial applications, it is usually necessary to design electronic products having a specified aspect ratio. For example, the aspect ratio of some electronic billboards is 16:5. However, in terms of considering the production cost, the manufacturers of LCD panels do not prefer to produce the LCD panels having the specified aspect ratio because the marketing demand is insufficient. Because of the above reasons, the LCD panels having the standard size are employed to produce the electronic billboards. Under this circumstance, the electronic billboards are very bulky.

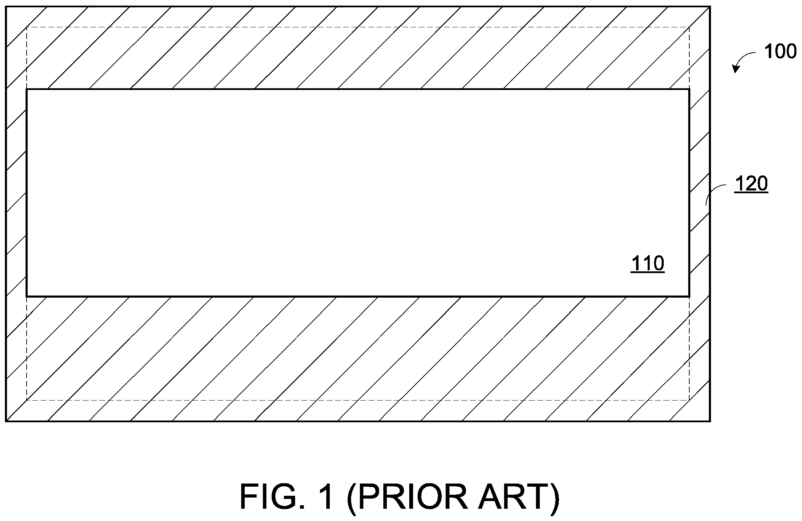

FIG. 1 is a schematic view illustrating a conventional electronic billboard having a specified aspect ratio. For producing an electronic billboard 100 having the specified aspect ratio of 16:5, an outer frame 120 is used to shelter a portion of the standard-size LCD panel 110. Although the electronic billboard 100 has the specified aspect ratio of 16:5, the volume of the electronic billboard 100 is very large.

### SUMMARY OF THE INVENTION

An embodiment of the present invention provides a LCD cutting method. Firstly, a LCD panel with M gate layout traces is cut into a cut LCD panel along a direction parallel to the M gate layout traces. The cut LCD panel includes a cut active area and a cut inactive area. The cut inactive area includes N serially-connected gate drivers. The cut active area includes N gate layout traces. The N gate layout traces are connected with the N serially-connected gate drivers, respectively. Moreover, N and M are positive integers, and N is smaller than M. Then, an input terminal of a first gate driver of the N serially-connected gate drivers is connected with a control layout trace.

Another embodiment of the present invention provides a LCD display system. The LCD display system includes a cut LCD panel. The cut LCD panel includes a cut active area and a cut inactive area. The cut inactive area includes N serially-connected gate drivers. The cut active area includes N gate layout traces. The N gate layout traces are connected with the N serially-connected gate drivers, respectively. The cut LCD panel is obtained by cutting a LCD panel with M gate layout traces along a direction parallel to the M gate layout traces. Moreover, N and M are positive integers, and N is smaller than M. The cut inactive area further includes a conductive line and a control layout trace. The control layout trace is connected with an input terminal of a first gate driver of the N serially-connected gate drivers through the conductive line.

Numerous objects, features and advantages of the present invention will be readily apparent upon a reading of the following detailed description of embodiments of the present invention when taken in conjunction with the accompanying drawings. However, the drawings employed herein are for the purpose of descriptions and should not be regarded as limiting.

### BRIEF DESCRIPTION OF THE DRAWINGS

The above objects and advantages of the present invention will become more readily apparent to those ordinarily skilled in the art after reviewing the following detailed description and accompanying drawings, in which:
FIG. 1 (prior art) is a schematic view illustrating a conventional electronic billboard having a specified aspect ratio;
FIG. 2A schematically illustrates the architecture of a LCD display system according to an embodiment of the present invention;
FIG. 2B schematically illustrates the architecture of a LCD display system according to another embodiment of the present invention;
FIGS. 3A, 3B and 3C schematically illustrate the steps of a LCD panel cutting method according to an embodiment of the present invention; and
FIG. 4 schematically illustrates the architecture of a LCD display system according to a further embodiment of the present invention.

### DETAILED DESCRIPTION OF PREFERRED EMBODIMENTS

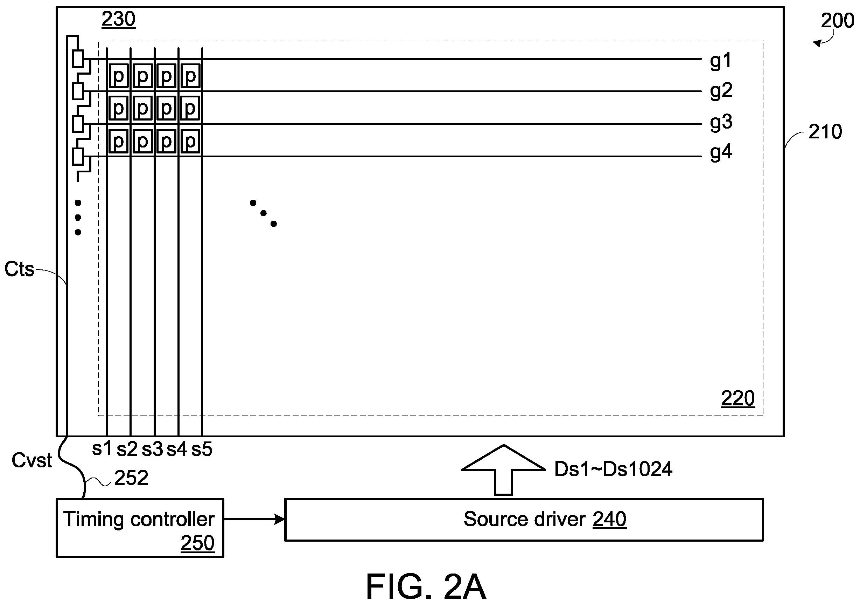

FIG. 2A schematically illustrates the architecture of a LCD display system according to an embodiment of the present invention. As shown in FIG. 2A, the LCD display system 200 comprises a LCD panel 210, a timing controller 250 and a source driver 240. The LCD panel 210 comprises an active area 220 and an inactive area 230.

The active area 220 comprises plural gate layout traces, plural pixels p in an array arrangement and plural source layout traces. In case that the LCD panel 210 has a standard size, an aspect ratio of 16:9 and a resolution of 1024x768, the active area 220 comprises at least 768 gate layout traces g1∼g768, 1024 source layout traces s1∼s1024 and 1024x768 pixels. Each pixel p is connected with a corresponding gate layout trace and a corresponding source layout trace.

The inactive area 230 comprises plural serially-connected gate drivers. Since the resolution of the LCD panel 210 is 1024x768, the inactive area 230 comprises 768 serially-connected gate drivers. Each gate driver generates a gate pulse to the corresponding gate layout trace. The next-stage gate driver generates the corresponding gate pulse according to the gate pulse from the previous-stage gate driver.

As shown in FIG. 2A, the timing controller 250 is connected with a control layout trace Cts of the inactive area 230 through a flexible cable 252. The control layout trace Cts is also connected with the input terminal of the first gate driver, which is located at the upper left side of the inactive area 230. The control layout trace Cts receives a vertical start pulse Cvst from the timing controller 250.

When the timing controller 250 generates the vertical start pulse Cvst to the input terminal of the first gate driver, the first gate driver generates a gate pulse to the gate layout trace g1. When the gate pulse from the gate layout trace g1 is received by the second gate driver, the second gate driver generates a gate pulse to the gate layout trace g2. The rest may be deduced by analogy. Consequently, all of the gate drivers generate the corresponding gate pulses to the corresponding gate layout traces g1∼g768 sequentially.

Under control of the timing controller 250, the source driver 240 generates image data Ds1∼Ds1024 to the corresponding source layout traces s1∼s1024.

Moreover, when the timing controller 250 generates the vertical start pulse Cvst, the source driver 240 correspondingly generates the image data Ds1∼Ds1024 to the corresponding source layout traces s1∼s1024. For example, when the first-row pixels p receive the gate pulse through the gate layout trace g1, all of the first-row pixels p receive the image data Ds1∼Ds1024 through the corresponding source layout traces s1∼s1024. Similarly, when the second-row pixels p receive the gate pulse through the gate layout trace g2, all of the second-row pixels p receive the image data Ds1∼Ds1024 through the corresponding source layout traces s1∼s1024. The rest may be deduced by analogy. After the 768 gate pulses are generated sequentially, all of the pixels of the LCD panel 210 receive the image data. Consequently, an image frame having an aspect ratio of 16:9 is shown on the LCD panel 210.

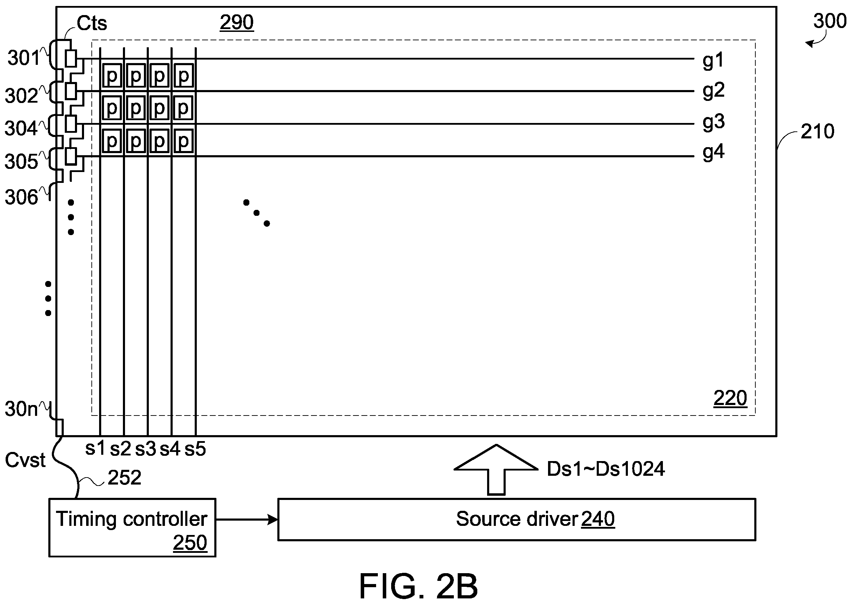

FIG. 2B schematically illustrates the architecture of a LCD display system according to another embodiment of the present invention. In comparison with the LCD display system 200 of FIG. 2A, the wiring structure of the inactive area 290 in the LCD display system 300 of this embodiment is distinguished. The wiring structure of the inactive area 290 will be described as follows.

Since the lateral edge of the inactive area 290 is very narrow, the inactive area 290 is only sufficient to include the gate drivers but insufficient to include the control layout trace. For solving the above drawback, the lateral edge of the inactive area 290 is additionally equipped with plural layout line segments. Moreover, these layout line segments are connected with each other through flexible cables 301∼30n. Meanwhile, the timing controller 250 can be electrically connected with the first gate driver, and the vertical start pulse Cvst from the timing controller 250 can be transmitted to the first gate driver.

The present invention further provides a LCD panel cutting method. By the LCD panel cutting method, a LCD panel having the standard size is cut into a LCD panel having a specified aspect ratio. After the control layout trace Cts is repaired, the LCD panel having a desired aspect ratio can be normally operated.

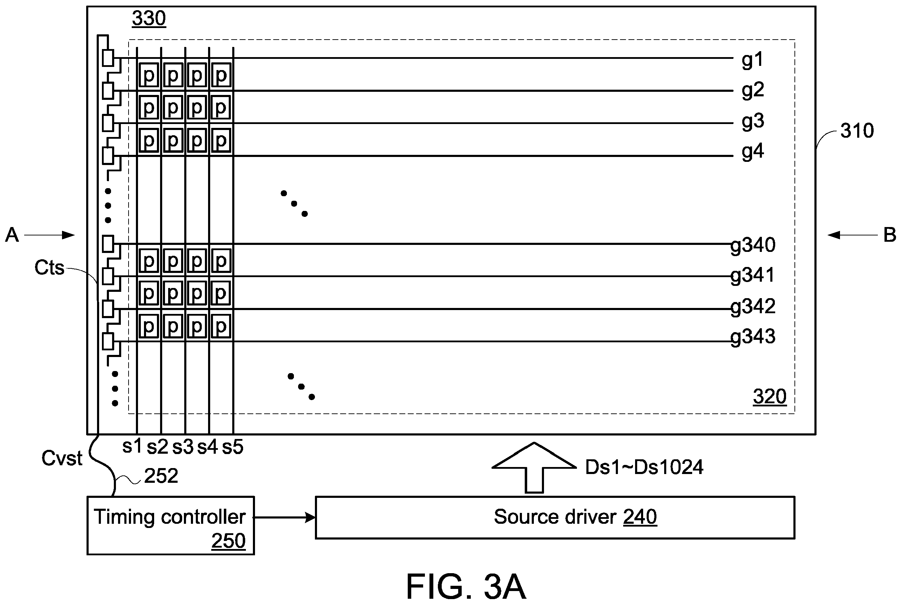

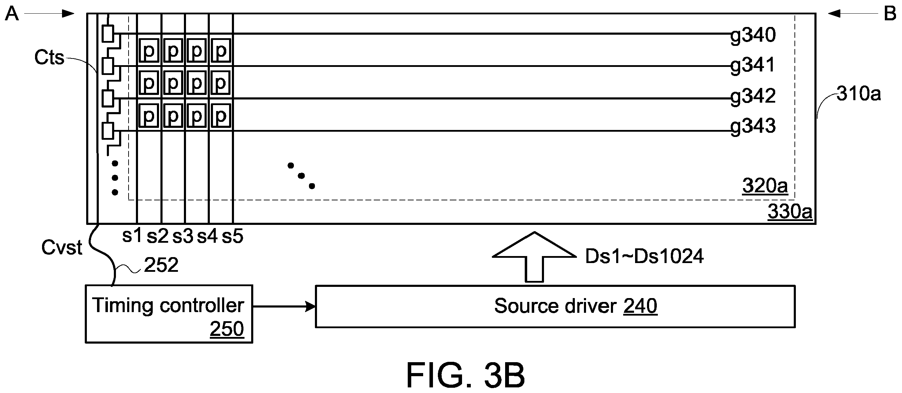

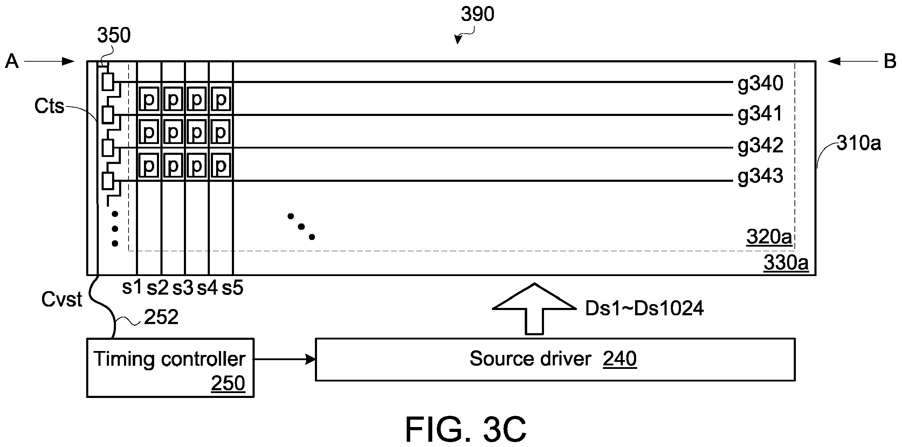

FIGS. 3A, 3B and 3C schematically illustrate the steps of a LCD panel cutting method according to an embodiment of the present invention.

As shown in FIG. 3A, a LCD panel 310 having the standard size is provided. The LCD panel 310 may be provided by the LCD panel manufacturer. For example, the aspect ratio of the LCD panel 310 is 16:9. That is, the configuration of the LCD panel 310 is similar to that of the LCD panel 210 of FIG. 2A.

In order to produce a LCD panel having the aspect ratio of 16:5, the LCD panel 310 is cut along a horizontal line passing through the two points A and B. That is, the gate layout traces g340∼g768 are retained. After the cutting step is completed, a cut LCD panel 310a as shown in FIG. 3B is produced. The aspect ratio of the cut LCD panel 310a is 16:5.

As shown in FIG. 3B, the control layout trace Cts is not connected with any gate driver at this stage. For allowing the cut LCD panel 310a to be normally operated, the control layout trace Cts should be repaired. As mentioned above, the vertical start pulse Cvst from the timing controller 250 is transmitted to the first gate driver through the control layout trace Cts. As shown in FIG. 3C, the control layout trace Cts and the input terminal of the first gate driver are connected with each other through a conductive line 350. Consequently, the first gate driver of the cut LCD panel 310a is electrically connected with the control layout trace Cts.

A LCD display system is shown in FIG. 3C. The LCD display system 390 comprises the cut LCD panel 310a, a timing controller 250 and a source driver 240. The cut LCD panel 310a comprises a cut active area 320a and a cut inactive area 330a.

The cut active area 320a comprises plural gate layout traces, plural pixels p in an array arrangement and plural source layout traces. Since the cut LCD panel 310a has an aspect ratio of 16:5 and a resolution of 1024x429, the cut active area 320a comprises at least 429 gate layout traces g340∼g768, 1024 source layout traces s1 ∼s1024 and 1024x429 pixels.

The cut inactive area 330a comprises plural serially-connected gate drivers. Since that the resolution of the cut LCD panel 310a is 1024x429, the cut inactive area 330a comprises 429 serially-connected gate drivers. Each gate driver generates a gate pulse to the corresponding gate layout trace. The next-stage gate driver generates the corresponding gate pulse according to the gate pulse from the previous-stage gate driver.

In this embodiment, the timing controller 250 is connected with the control layout trace Cts of the cut inactive area 330a through a flexible cable 252. The control layout trace Cts is also connected with the input terminal of the first gate driver through the conductive line 350. Consequently, the control layout trace Cts receives a vertical start pulse Cvst from the timing controller 250.

When the timing controller 250 generates the vertical start pulse Cvst to the input terminal of the first gate driver, the first gate driver generates a gate pulse to the gate layout trace g340. When the gate pulse from the gate layout trace g1 is received by the second gate driver, the second gate driver generates a gate pulse to the gate layout trace g341. The rest may be deduced by analogy. Consequently, all of the gate drivers generate the corresponding gate pulses to the corresponding gate layout traces g340∼g768 sequentially.

Under control of the timing controller 250, the source driver 240 generates image data Ds1 ∼Ds1024 to the corresponding source layout traces s1∼s1024.

Moreover, when the timing controller 250 generates the vertical start pulse Cvst, the source driver 240 correspondingly generates the image data Ds1∼Ds1024 to the corresponding source layout traces s1∼s1024. For example, when the first-row pixels p receive the gate pulse through the gate layout trace g340, all of the first-row pixels p receive the image data Ds1∼Ds1024 through the corresponding source layout traces s1∼s1024. Similarly, when the second-row pixels p receive the gate pulse through the gate layout trace g341, all of the second-row pixels p receive the image data Ds1∼Ds1024 through the corresponding source layout traces s1∼s1024. The rest may be deduced by analogy. After the 429 gate pulses are generated sequentially, all of the pixels of the LCD panel 210 receive the image data. Consequently, an image frame having the aspect ratio of 16:5 is shown on the cut LCD panel 310a.

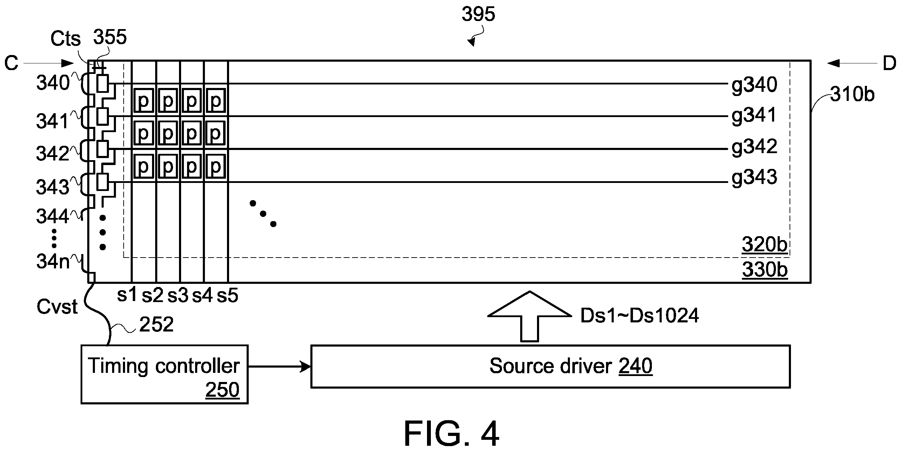

FIG. 4 schematically illustrates the architecture of a LCD display system according to a further embodiment of the present invention. Firstly, a LCD panel having a standard size is provided. The configuration of the LCD panel having the standard size is similar to that of the LCD panel 210 of FIG. 2B. In order to produce a LCD panel having the aspect ratio of 16:5, the LCD panel 310 is cut along a horizontal line passing through the two points C and D. After the LCD panel cutting method, the LCD display system 395 as shown in FIG. 4 is produced. The LCD display system 395 comprises a cut LCD panel 310b, a timing controller 250 and a source driver 240. The cut LCD panel 310b comprises a cut active area 320b and a cut inactive area 330b.

The cut active area 320b comprises plural gate layout traces, plural pixels p in an array arrangement and plural source layout traces. Since the cut LCD panel 310b has an aspect ratio of 16:5 and a resolution of 1024x429, the cut active area 320b comprises at least 429 gate layout traces g340∼g768, 1024 source layout traces s1∼s1024 and 1024x429 pixels.

The cut inactive area 330b comprises plural serially-connected gate drivers. Since that the resolution of the cut LCD panel 310b is 1024x429, the cut inactive area 330b comprises 429 serially-connected gate drivers. Each gate driver generates a gate pulse to the corresponding gate layout trace. The next-stage gate driver generates the corresponding gate pulse according to the gate pulse from the previous-stage gate driver.

Moreover, the lateral edge of the cut inactive area 330b is additionally equipped with plural layout line segments. Moreover, these layout line segments are connected with each other through flexible cables 340∼34n. The control layout trace Cts is also connected with the input terminal of the first gate driver through a conductive line 355. Consequently, the control layout trace Cts receives a vertical start pulse Cvst from the timing controller 250.

When the timing controller 250 generates the vertical start pulse Cvst to the input terminal of the first gate driver, the first gate driver generates a gate pulse to the gate layout trace g340. When the gate pulse from the gate layout trace g340 is received by the second gate driver, the second gate driver generates a gate pulse to the gate layout trace g341. The rest may be deduced by analogy. Consequently, all of the gate drivers generate the corresponding gate pulses to the corresponding gate layout traces g340∼g768 sequentially.

Under control of the timing controller 250, the source driver 240 generates image data Ds1∼Ds1024 to the corresponding source layout traces s1∼s1024.

Moreover, when the timing controller 250 generates the vertical start pulse Cvst, the source driver 240 correspondingly generates the image data Ds1∼Ds1024 to the corresponding source layout traces s1∼s1024. For example, when the first-row pixels p receive the gate pulse through the gate layout trace g340, all of the first-row pixels p receive the image data Ds1∼Ds1024 through the corresponding source layout traces s1∼s1024. Similarly, when the second-row pixels p receive the gate pulse through the gate layout trace g341, all of the second-row pixels p receive the image data Ds1∼Ds1024 through the corresponding source layout traces s1∼s1024. The rest may be deduced by analogy. After the 429 gate pulses are generated sequentially, all of the pixels of the LCD panel 210 receive the image data. Consequently, an image frame having the aspect ratio of 16:5 is shown on the cut LCD panel 310a.

From the above descriptions, the present invention provides a LCD panel cutting method and a LCD display system using the method. Firstly, a LCD panel with M gate layout traces is cut into a cut LCD panel along a direction parallel to the M gate layout traces. The cut LCD panel comprises a cut active area and a cut inactive area. The cut inactive area comprises N serially-connected gate drivers. The cut active area comprises N gate layout traces. The N gate layout traces are connected with the N serially-connected gate drivers, respectively. Moreover, N and M are positive integers, wherein N is smaller than M. Then, the input terminal of the first gate driver of the N serially-connected gate drivers in the cut inactive area is connected with a control layout trace. Consequently, a vertical start pulse is transmitted to the first gate driver of the N serially-connected gate drivers through the control layout trace.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A LCD cutting method, comprising steps of:
allowing a LCD panel (310) with M gate layout traces to be cut into a cut LCD panel (310a) along a direction (AB) parallel to the M gate layout traces, wherein the cut LCD panel (310a) comprises a cut active area (320a) and a cut inactive area (330a), the cut inactive area (330a) comprises N serially-connected gate drivers, the cut active area (320a) comprises N gate layout traces, and the N gate layout traces are connected with the N serially-connected gate drivers, respectively, wherein N and M are positive integers, and N is smaller than M; and
connecting an input terminal of a first gate driver of the N serially-connected gate drivers with a control layout trace (Cts).

2. The LCD cutting method as claimed in claim 1, wherein a vertical start pulse is transmitted to the first gate driver of the N serially-connected gate drivers through the control layout trace.

3. The LCD cutting method as claimed in claim 2, wherein the vertical start pulse is generated by a timing controller, and the vertical start pulse is transmitted from the timing controller to the control layout trace of the cut inactive area.

4. The LCD cutting method as claimed in claim 3, wherein the cut active area comprises plural source layout traces, and the plural source layout traces are connected with a source driver, wherein the timing controller controls the source driver to generate plural image data to the corresponding source layout traces.

5. A LCD display system (390), comprising:
a cut LCD panel (310a) comprising a cut active area (320a) and a cut inactive area (330a), wherein the cut inactive area (330a) comprises N serially-connected gate drivers, the cut active area (320a) comprises N gate layout traces, and the N gate layout traces are connected with the N serially-connected gate drivers, respectively,
wherein the cut LCD panel (310a) is obtained by cutting a LCD panel (310) with M gate layout traces along a direction (AB) parallel to the M gate layout traces, N and M are positive integers, and N is smaller than M,
wherein the cut inactive area (330a) further comprises a conductive line (350) and a control layout trace (Cts), and the control layout trace (Cts) is connected with an input terminal of a first gate driver of the N serially-connected gate drivers through the conductive line (350).

6. The LCD display system as claimed in claim 5, wherein the LCD display system further comprises a timing controller for generating a vertical start pulse, wherein the vertical start pulse is transmitted to the input terminal of the first gate driver of the N serially-connected gate drivers through the control layout trace.

7. The LCD display system as claimed in claim 6, wherein the LCD display system further comprises a source driver, and the cut active area further comprises plural source layout traces, wherein the plural source layout traces are connected with the source driver.

8. The LCD display system as claimed in claim 7, wherein the timing controller controls the source driver to generate plural image data to the corresponding source layout traces.
